# FASCICULE DE BREVET EUROPEEN

(11) **EP 0 417 125 B1**
(45) Date de publication et mention de la délivrance du brevet: **10.02.1993**
(21) Numéro de dépôt: 89905417.5
(22) Date de dépôt: 24.04.1989
(51) Int. Cl.: G01C 15/00, G01S 17/87

(54) **PROCEDE DE LEVE DE METRES DE BATIMENT PAR TELEMETRIE**
VERFAHREN ZUR VERMESSUNG VON GEBÄUDEN DURCH ABSTANDSMESSUNG
METHOD FOR THE SURVEY OF BUILDING MEASUREMENTS BY TELEMETRY

(30) Priorité: 22.04.1988 FR 8805564
(43) Date de publication de la demande: 20.03.1991
(73) Titulaire: INSTITUT INTERNATIONAL DE ROBOTIQUE ET D'INTELLIGENCE ARTIFICIELLE DE MARSEILLE, F-13001 Marseille (FR); DIALOGIC S.A., F-75010 Paris (FR)
(72) Inventeur: GIRAUD, Christian, F-13380 Plan-de-Cuques (FR)
(74) Mandataire: Moretti, René
(86) Numéro de dépôt international: FR8900193
(87) Numéro de publication internationale: WO8910538

(56) Documents cités:
- EP-A- 0 064 013
- FR-A- 2 186 658

## Description

La présente invention a pour objet des procédés pour effectuer des levés de métrés d'enveloppe constituée de surfaces planes ou gauches en utilisant un distancemètre par exemple à faisceau laser couplé à un théodolite.

Le secteur technique de l'invention est celui des procédés de géométre pour la levée des côtes et des dimensions de tout espace géométrique.

Une des applications principales de l'invention est celui de la levée,en architecture,de métrés de pièces constituant un bâtiment.

On rappelle, d'après Monsieur Henri LAGRANGE (encyclopédie du BTP), que les levés d'architecture ont pour principal objet la représentation d'une construction existante avec toutes ses particularités et ses défauts. Ils sont utilisés par les architectes ou les bureaux d'études pour asseoir leurs projets de modification. Pour rendre compte de tous les éléments constitutifs d'un édifice, il est nécessaire d'en établir plusieurs plans, plusieurs coupes et plusieurs élévations. Pour ce!a, il est nécessaire d'effectuer au préalable le relevé des côtes et des dimensions de tout ce qui constitue l'édifice : cette opération est appelée un levé de métrés et se fait suivant différentes méthodologies.

Une première méthode est la photogrammétrie : elle est particulièrement performante pour les levés des façades, c'est-à-dire pour les surfaces appréhendables à partir de deux clichés seulement; elle est très riche en informations et permet de lever des détails facilement. Par contre, la photogramétrie est inadaptée pour le levé intérieur. En effet, elle nécessiterait au minimum deux clichés pour chaque facette du volume d'une pièce, et le chaînage de tous ces clichés, les uns par rapport aux autres nécessiterait un équipement de repérage supplémentaire qui rendrait la méthode très lourde, et le dépouillement et l'interprétation des clichés longs, fastidieux et coûteux. Cette méthodologie n'est du reste pratiquement pas utilisée à l'intérieur des bâtiments, en dehors du relevé des parties ornementales.

Actuellement, le levé architectural des métrés intérieurs de bâtiment est essentiellement manuel.

Cette seconde méthodologie repose sur la triangulation ou méthode par diagonale. Monsieur Henri LAGRANGE dans l'encyclopédie BTP aux Editions EYROLLES, en rappelle le principe : "elle consiste à mesurer les côtés périmétriques de chaque pièce en situant tous les détails : portes, fenêtres etc..., ainsi que la diagonale joignant deux angles opposés pour fixer la direction relative des murs. La surface de la pièce se trouve ainsi décomposée en triangles dont les trois côtés sont mesurés. Ce procédé, théoriquement très simple, présente le plus souvent dans la pratique, de grosses difficultés, dues à l'encombrement des pièces, d'une part et à leur forme irrégulière, d'autre part".

Un certain nombre de mesures est établi à partir de tracés au sol, sur les parois ou bien par des plans matérialisés par un fil à plomb ou des planches, le temps de la mesure,nécessitant souvent de déplacer le mobilier et de dégager les parois. Les erreurs pouvent être importantes, surtout quand il s'agit de recaler des pièces contigues qui n'ont aucune ouverture en commun : des mesures d'épaisseurs par des moyens mécaniques ou acoustiques sont alors nécessaires pour obtenir une certaine précision.

Les métrés détaillés sont alors compensés par des mesures globales et.,au dessin, l'opérateur pallie aux oublis, aux erreurs ou aux incohérences des mesures. Ce procédé nécessite donc une succession d'opérations, de recopies de mesures, d'interprétation et de tracé. Cela prend du temps, c'est fastidieux, coûteux et comporte des risques d'erreurs.

A l'extérieur et dans le domaine des travaux publics, le problème de relevé de côtes est très différent de celui des métrés de pièces. D'une part, les distances à mesurer sont plus importantes et les précisions demandées sont moindres et, d'autre part et surtout, la méthodologie repose sur un principe et des moyens de mesure adaptés aux terrains accidentés.

Cette méthode appelée levé topographique est, à l'heure actuelle, la plus élaborée de tous les levés et a nécessité le développement et la mise au poins de matériel spécifique. On utilise un théodolite optique que l'on met en station sur un point déjà connu, repéré par exemple par rapport à des amers de référence fixe visibles. Chaque point que l'on veut relever est alors déterminé dans l'espace sur un axe repéré grâce à son angle horizontal et son angle vertical par rapport à une direction de référence. On détermine ensuite ce point sur cet axe soit par intersection avec un ou deux autres axes relevés depuis une ou deux autres stations connues, soit par une mesure directe depuis la première station, grâce à un distancemètre. Cette dernière méthode est la plus simple et la plus utilisée à ce jour grâce au développement des distancemètres à faisceau laser qui se réfléchit sur un prisme monté sur un support placé au point que l'on veut relever. La portée du faisceau peut être de plusieurs milliers de mètres et la mesure est suffisamment précise pour les besoins du domaine considéré.

Ce procédé s'appuie sur le principe géométrique de la détermination d'un point par ses coordonnées polaires et utilise en combinaison, un théodolite et un distancemètre laser, monté sur un même support suivant des axes parallèles, constituant un télmètre.

L'opérateur utilise cet appareil en levé topographique en réalisant un cheminement pour relier les différentes stations entre elles. Ce cheminement est une succession ininterrompue d'opérations élémentaires de rayonnement,permettant de transmettre de proche en proche, la position des stations successives; les points cibles de levés topographiques sont alors eux-mêmes mesurés depuis au moins une de ces stations. Le cheminement est en général fermé sur lui-même et constitue un polygone pour recaler et corriger éventuellement des dérives dans les mesures.

Cette dernière méthodologie n'est pas adaptée au bâtiment où les distances sont plus courtes et où le levé s'effectue dans un univers structuré, constitué d'éléments distincts en grand nombre : parois, murs, portes, radiateurs, plafond, cheminée..., c'est le levé de l'ensemble de ceux-ci qui permet de reconstituer un métré détaillé.

Le relevé de ce métré doit tenir compte de ces éléments que nous classerons en trois familles :
- l'enveloppe composée de toutes les parois délimitant le volume de la pièce (murs,sols, plafond);
- les éléments de construction dits "de gros oeuvre" qui sont intégrés et soutiennent l'enveloppe (poutres,poteaux, niches, escaliers, baies) ou sont des défauts (lézardes en particulier;
- les éléments d'équipements dits "de second oeuvre", qui sont solidaires de l'enveloppe (poutres, fenêtres, radiateurs, luminaires).

A ces trois familles, il faut donc rajouter celle du mobilier qui est mobile et non lié au bâtiment. En général, il n'est donc pas relevé et n'intéresse pas la méthode de levé, par contre, il la gêne et en complique l'application.

Le problème posé est de pouvoir effectuer des relevés de côtes à l'intérieur d'une pièce de bâtiment permettant d'en faire le levé de métrés,avec précision, sans avoir à prendre des mesures manuelles de dimensions des éléments constitutifs de la pièce nécessitant le déplacement du mobilier, un relevé et un calcul par triangulation et une transposition de tracé approximative.

Un autre problème posé est de pouvoir effectuer la reproduction du tracé des métrés sous toute forme souhaitée, en plans, coupe ou perspective, sans avoir à retranscrire les relevés manuellement, ni à calculer les positons et dimensions des éléments, ni à réaliser un tracé manuel.

Une solution au problème posé, objet de la présente invention est un procédé de levé de métrés d'une enveloppe constituée de surfaces quelconques, en particulier planes, délimitant un volume ouvert ou fermé, qui peut être notamment une pièce située dans un bâtiment, lequel procédé utilise un télémètre constitué d'un distancemètre à faisceau par exemple laser, caractérisé en ce que :
- on positionne ledit télémètre en station sur un emplacement situé en un point origine quelconque dudit volume ;
- on oriente successivement l'axe de visée du télémètre vers au moins deux points quelconques quand on connaît déjà une caractéristique géométrique dudit plan et sinon au moins trois points alors non alignés de chaque plan constituant ladite enveloppe;
- on s'assure que chaque point visé est situé sur une surface apte à réfléchir une partie du faisceau dans sa direction d'incidence, permettent alors la mesure de télémétrie quelle que soit l'inclinaison de ladite surface;
- si ce n'est par le cas, on place en chaque point choisi un réflecteur permettant cette réflexion;
- on effectue avec le télémètre la mesure de distance pour chacun desdits points et on relève les angles de visée correspondant en gisement et en azimut, par rapport à un même axe de référence pour toutes les directions de visée;
- on calcule la position de chaque plan à partir des coordonnées polaires des points situés dans celui-ci par rapport à l'emplacement de la station origine;
- on calcule l'intersection des plans pris deux à deux et on définit ainsi les arêtes du volume considéré;
- on trace et on reproduit les métrés de ce volume, défini entièrement par son enveloppe, sous forme de plans, de coupe d'élévation et/ou de perspectives.

Une autre solution complémentaire de la précédente, répondant également au problème posé, est un procédé de levé de métrés, caractérisé en ce que :
- on stocke dans la mémoire d'un ordinateur les mesures des coordonnées polaires de tous les points visés par le télémètre, en codant et repérant, d'une part, les points associés au même plan, d'autre part, les points associés à tous les éléments particuliers de chaque plan et enfin les plans associés à la même enveloppe repérée à partir d'un emplacement origine de station de mesure;
- on programme l'ordinateur pour calculer la position de tous les plans à partir du point origine de ladite station, puis pour calculer l'intersection de tous les plans deux à deux et à conserver en mémoire la définition de l'enveloppe ainsi déterminée par ses plans et ses arêtes;
- on programme l'ordinateur pour calculer les mesures de distance et d'angle en fonction d'erreurs de mesure et de défauts de planéité possible afin de lisser les plans à une valeur de tolérance de l'ordre du cm;
- on range dans une mémoire permanente et précodée les dimensions mesurées de tout élément particulier pouvant occuper une partie de plans, et on positionne chaque élément par rapport à un point caractéristique;
- on commande le tracé du métré désiré sous la forme souhaitée tels que plans, coupes, élévations et/ou perspectives à partir des données mesurées puis calculées de l'enveloppe et celles connues des éléments.

Le résultat est un nouveau procédé de levé de métrés d'une enveloppe constituée de surfaces planes.

Le procédé permet des relevés dans tout volume, même encombré d'objets indépendants de l'enveloppe, que l'on veut pouvoir tracer sur plan et sans avoir à déplacer le contenu du volume.

L'application principale de ce procédé est essentiellement le levé en architecture, de métrés de pièces dans un bâtiment.

Les avantages et les descriptions suivantes ont trait à cette application, mais n'ons pas de caractère limitatif.

Ce procédé permet, dans cette application au bâtiment, de pouvoir relever, d'une part, l'enveloppe seule très rapidement, sans avoir à tenir compte des autres éléments, ceux-ci pouvant être mesurés et mis en mémoire par ailleurs. En effet, ces derniers sont souvent répétitifs d'une pièce à l'autre et peuvent être déterminés une seule fois.

En combinant le relevé de l'enveloppe définie par ses surfaces gauches ou planes, dont on peut alors calculer aisément la surface métrique, et les éléments de construction et d'équipement, il est aisé et rapide d'en définir le métré pour les corps de métiers intéressés à intervenir dans les pièces du bâtiment, tels que pour les peintures, les tapisseries, les carrelages.

Les états des surfaces planes sur lesquelles les mesures d'angle et de distance sont effectuées ne nécessitent pas en général de préparation. Les points choisis peuvent être n'importe où sur cette surface et apte à réfléchir le faisceau laser, ce qui est aisément obtenu par un état de surfaces mat et clair, dont la luminance répond à la loi de LAMBERT.

L'utilisation intégrée avec un programme dit de CAO (conception assistée par ordinateur) met à la portée de l'utilisateur, même non formé aux méthodes et aux calculs de géomètre, la possibilité d'effectuer des métrés précis et rapides et à un coût donc très attractif, permettant ensuite la reproduction du tracé de la pièce directement sur une imprimante et sur écran sous la forme voulue.

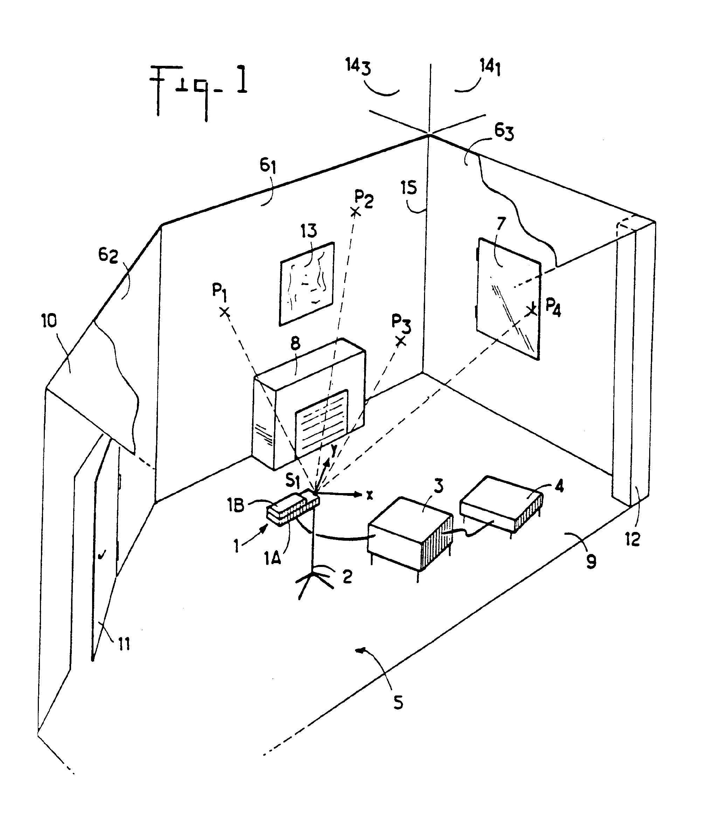

La description suivante se réfère aux dessins annexés qui représentent, sans aucun caractère limitatif, un exemple de procédé suivant l'invention de levé de métrés des pièces dans un bâtiment dont l'enveloppe est constituée, pour simplifier ici notre exemple, de surfaces planes. La figure 1 représente une vue en perspective du matériel permettant l'application des procédés de l'invention.

La figure 2 est une vue de dessus d'une visée télémétrique d'un point d'une paroi verticale.

La figure 3 est une représentation des coordonnées polaires d'un point de visée.

La figure 4 est une vue de dessus générale de plusieurs pièces accolées d'un bâtiment après le levé des métrés suivant le procédé.

La figure 5 est une vue en perspective de plusieurs pièces de bâtiment réalisée avec les procédés de l'invention.

Les exemples de métrés ne limitent en rien l'application des procédés à toute autre forme de pièces et de volumes de toute sorte, comportant de nombreuses parois, d'éléments de construction, des équipements et du mobilier. Il peut être aussi utilisé entre des pièces superposées, isolées les unes des autres, séparées par un espace extérieur.

La figure 1 représente une pièce 5 en perspective, dont le volume est limité par une enveloppe composée de plusieurs surfaces planes qui sont les murs 6₁, 6₂, 6₃, le plancher 9 et le plafond 10.

Cette enveloppe est portée par des éléments de gros oeuvre, tel que le pilier 12 et comporte elle-même des équipements de second oeuvre qui sont ici une fenêtre 7, une cheminée 8 et une porte 11.

Enfin, à l'intérieur de cette pièce 5, posé ou accroché aux parois, est disposé du mobilier tel que le tableau 13, fixé au mur 6₁.

On place en un point dégagé du plancher 9 et au mieux, au plus près du centre de sa surface, un télémètre 1, monté sur un trépied 2. Ce télémètre est composé d'un théodolite 1A, de tout type connu, permettant des visées optiques et de relever les angles de gisement et d'azimut de ces visées par rapport à un axe de référence Slx, placé dans un plan parfaitement horizontal sSly, obtenu par réglage relatif du théodolite et de son trépied. Ce théodolite est couplé à un distancemètre 1B à faisceau laser, de tout type connu comme ceux utilisés en topographie.

Les deux appareils sont montés solidaires, en général l'un au dessus de l'autre, de façon à ce que leurs axes de visée soient toujours parallèles.

On relie le télémètre 1 ainsi assemblé et réglé à l'unité centrale d'un ordinateur 3, de telle façon que les données de mesure obtenues par le télémètre soient directement introduites dans les mémoires de cet ordirateur, lequel est lui-même relié à une table traçante ou à une imprimante 4 qui reproduit le tracé des relevés de la pièce après traitement des relevés de mesure par un programme établi suivant le procédé.

Les trois éléments ci-dessus que sort le télémètre 1, son trépied 2 et l'ordinateur 3, auquel peut être rajoutée la table traçante 4, peuvent être montés sur un même support mobile autonome Un système de visée est alors couplé mécaniquement au télémètre et associée à un programme spécifique de reconnaissance de forme. On peut alors programmer ledit support mobile pour qu'il oriente automatiquement la visée du télémètre sur chaque plan de l'enveloppe et chaque élément particulier reconnu par le système de visée.Ledit support mobile peut alors être déplacé d'une pièce à une autre facilement, et optionnellement d'une manière automatique.

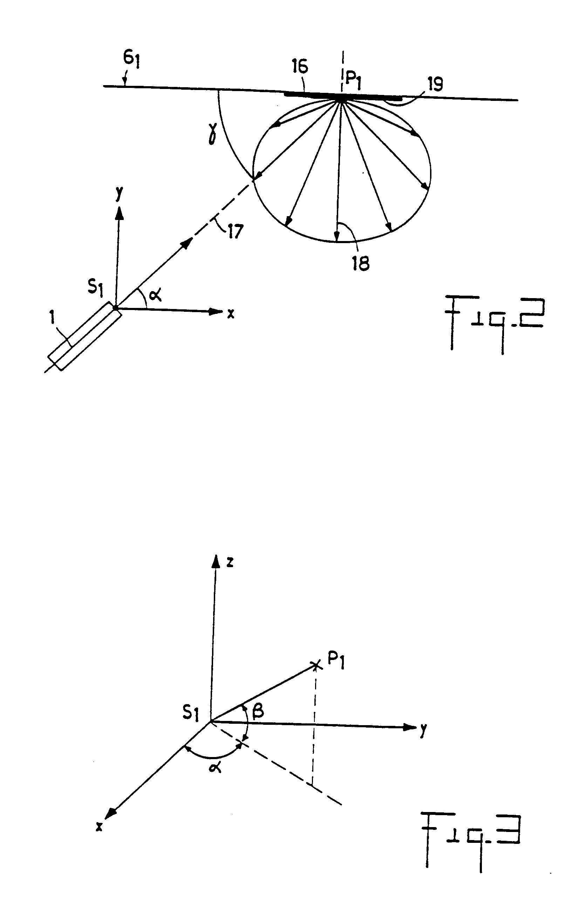

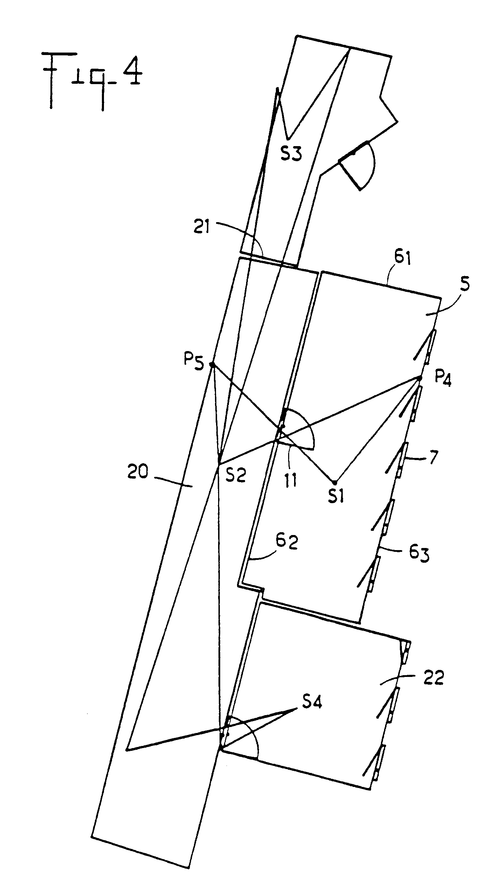

Le télémètre 1 est dit en station et toutes les mesures effectuées dans la même pièce seront réalisées par rapport au point origine de rotation et de référence S1, associé à ces axes de référence horizontaux Slx et Sly, tels que décrit dans la figure 3.

On oriente successivement l'axe de visée du télémètre 1 vers au moins trois points quelconques P1, P1 et P3 du premier mur 6₁,libres de tout équipement 8 et de mobilier 13. Ces points ne doivent pas être alignés et doivent être situés sur une surface apte à réfléchir une partie du faisceau laser du distancemètre 1B vers sa direction d'incidence, permettant la mesure de télémétrie quelle que soit l'inclinaison de ladite surface.

Si ce n'est pas le cas, on choisit d'autre point de visée jusqu'à trouver une surface au voisinage dudit point qui respecte la condition de LAMBERT sur les sources orthotropes tel que décrit dans la figure 2. Normalement, la plupart des parois des pièces satisfont naturellement à cette condition.

On effectue alors les mesures de distance et d'angle de visée pour chacun desdits points. Les données de ces trois points ainsi relevés en coordonnées polaires sont adressées à l'ordinateur qui est programmé pour calculer à partir de ces données la position du plan 14₁ qui inclut le mur 6₁, par rapport à l'origine de référence S1. On effectue les mêmes opérations pour le mur adjacent 6₃ dont on détermine la position du plan 14₃.

Les deux plans 14₁ et 14₃ définis permettent de calculer automatiquement leur intersection qui correspond à l'angle 15 de la pièce 5. Ainsi, de proche en proche, on relève toutes les parois et on détermine toutes les intersections : pans de murs entre-eux, pans de murs-plafond et pans de murs plancher. L'enveloppe est alors parfaitement connue et ses coordonnées par rapport au points origine de référence S1 sont stockés dans la mémoire de l'ordinateur 3.

Pour relever les équipements situés sur cette enveloppe, telle que la fenêtre 7, on mesure préalablement les dimensions de celle-ci que l'on stocke également dans une mémoire auxiliaire de l'ordinateur. Ces éléments sont en général standard et sont souvent préalablement cornus et répétitifs d'une pièce à l'autre. Il sont alors codifiés suivant une numérotation de type connu comme par exemple celle de BARENT ou KEOPS et mis en mémoire permanente dans l'ordinateur 3. Il suffit alors de relever un ou plusieurs points caractéristiques P4 de cet élément (poignée, charnière...), de l'associer au mur 6₃ correspondant et d'appeler dans la mémoire le code donné à cet élément avec toutes ses dimensions préalablement connues ou paramétrables. On procède de la même façon avec les éléments de poutre et pilier 12, de porte 11, de cheminée 8 et même de mobilier comme le tableau 13 si désiré.

La figure 2 est une vue de dessus de la visée télémétrique du point P1 situé sur le mur 6₁, à partir du télémètre 1 positionné en station au point d'origine S1. La visée optique directe par le théolodite donne l'angle de gisement α du point P1 et le distancemètre laser donne la mesure de distance S1 P1 ici projetée sur le plan horizontal x y. Cependant, pour que cette mesure laser puisse s'effectuer, il est nécessaire que la surface 16 au voisinage du point P1 réfléchisse suffisamment le faisceau laser incident 17 dans cette même direction. Pour cela, des essais ont démontré qu'il était nécessaire et suffisant que cette surface 16 se comporte le plus possible comme une source isotrope, c'est-à-dire de luminance constante 18 dans toutes les directions, ce qui permet des visée quel que soit l'angle γ du faisceau 17 avec ladite surface 16.

Pour obtenir une telle caractéristique d'état de surface, celle-ci peut être de couleur mate et claire, ce qui est finalement le cas de la plupart des parois. On choisira alors sur le mur 6₁ considéré, trois points répondant à ce critère. Si aucun point ne peut satisfaire à celui-ci, on rajoutera sur cette surface 16, un réflecteur plan très fin 19, tel qu'une feuille de papier de type autocollante et ayant les caractéristiques voulues. La minceur du réflecteur est nécessaire pour ne pas perturber la mesure de distance P1 S1. Ainsi, les réflecteurs type prisme utilisés en topographie, ne sont pas nécessaires et perturberaient les mesures.

La figure 3 représente dans l'espace, les coordonnées polaires d'un point tel que P1 par rapport au point de référence origine S1 où est situé le télémètre en station.

Cet appareil permet d'obtenir par mesures directes, le gisement α, l'azimut β et la distance polaire S1 P1. Les mesures sont alors mises automatiquement en conformité de saisie directe dans le programme de calcul de l'ordinateur.

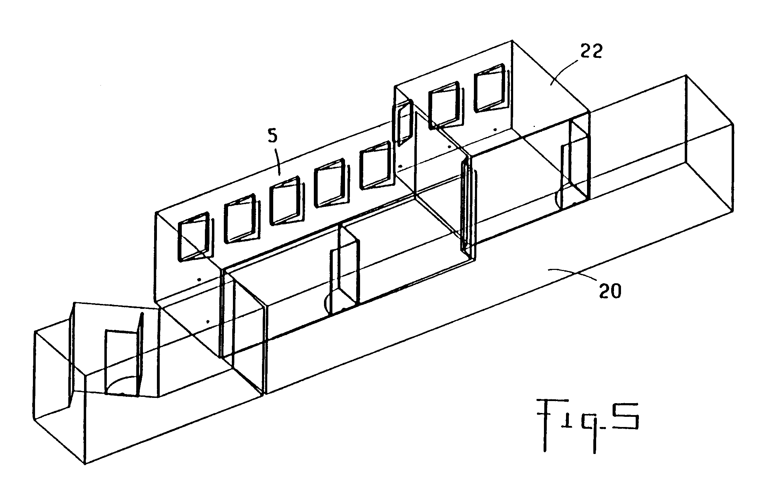

La figure 4 est une vue de dessus générale de plusieurs pièces accolées d'un bâtiment après les levées des métrés de chacune suivant le procédé décrit dans la figure 1. On notera tout d'abord que la pièce 20 est très longue et comporte des parties en retrait, ne permettant pas des visées à partir d'une seule station, sans risque d'erreur. On définit alors une cloison fictive 21, qui peut être tout objet à surfaces planes placé au même endroit pendant toute la mesure. On choisit deux stations S2 et S3 à partir desquelles cet objet sera repéré et constituera pour le calcul de l'enveloppe de la pièce une cloison fictive, qu'il suffira d'effacer par la suite. La pièce 20 devient alors pour le déroulement du procédé une pièce double qui sera analysée et positionnée comme la pièce 5, par rapport à cette pièce 20.

On choisit dans chacune des deux pièces 5 et 20, un point de référence soit P4 pour la pièce 5 et P5 pour la pièce 20, de telle façon qu'ils soient tous deux visibles depuis les deux stations S1 et S2, grâce à l'ouverture commune de la porte 11. On marque ces deux points d'un repère visible qui devra rester pendant la durée des mesures. On relève les coordonnées de P4 et P5 par rapport à S1 puis à S2, en même temps que l'on effectue le relevé de l'enveloppe de chaque pièce correspondante de façon à conserver pour chacune les mêmes orientations du repère d'axes de référence.

Par calcul direct de triangulation inverse, on peut alors positionner les deux points d'origine de stations par rapport à la base commune constituée des points P4 et P5, ce qui revient à positionner exactement les deux stations S1 et S2 l'une par rapport à l'autre en distance et en orientation.

Par un programme de calcul géométrique simple, les deux enveloppes des pièces relevées depuis les deux stations vont se caler exactement l'une par rapport à l'autre tel que représenté sur la figure. L'épaisseur du mur 6₂ est ainsi parfaitement déterminé même si les deux faces de celui-ci n'étaient pas parallèles

Afin de tenir compte des erreurs de mesure éventuelles dues souvent aux imperfections des surfaces, les points levés sur chaque paroi sont lissés par programme de calcul pour former une surface réglée ou plane et reconstituer ainsi une paroi levée parfaitement régulière ou plane. Un lissage et une approximation d'1/2 cm peut être retenu car cette variation est insignifiante pour une paroi.

On effectue la même opération de levée dans la pièce 22 à partir de la station S4 que l'on positionne par rapport à la pièce 20 et la station S2. La pièce 22 est alors calée par rapport à la pièce 5 bien qu'il n'y ait pas d'ouverture entre ces deux pièces.

On peut noter ainsi qu'il est possible de positionner deux pièces l'une par rapport à l'autre, même sans ouverture commune. Il suffit de prendre une référence commune extérieur qui peut être réelle comme ici la pièce 20 ou qui peut être fictive.

La figure 5 est une vue perspective des pièces 5-20 et 22 suivant le procédé ci-dessus et telles que représentées dans la figure 4. Cette vue est calculée par l'ordinateur suivant tout point d'observation: souhaité et tracée sur l'imprimante associée à cet ordinateur. Elle donne un exemple de représentation de reproduction que le procédé permet d'obtenir automatiquement pour des levés télémétriques de points situés sur les surfaces même des enveloppes et des éléments à positionner. A partir des mêmes données, il peut être tracé également tout plan, coupe et élévations, en tenant compte des parties cachées ou non. Ensuite, l'opérateur peut introduire toute modification et gère les coordonnées de ces enveloppes de pièces avec son logiciel de conception assistée par ordinateur comme avec tout programme d'architecture.

La présente description et les dessins annexés représentent une enveloppe de pièces constituées de surfaces planes, mais le procédé est en effet valable, même avec des enveloppes constituées de surfaces gauches, qui sont en général. paramétrables et d'équation connue et pour lesquelles il faut relever un nombre de points suffisant pour les définir exactement.

En effet, toute surface gauche paramétrable peut être défini parfaitement par un nombre donné de points correspondant au degré des équations de paramétrage.

Des calculs mathématiques permettent alors de tracer cette surface à partir des coordonnées de ces points.

Ainsi, comme on l'a vu pour l'exemple du plan, avec trois points, or définit parfaitement sa position ou deux points si l'on connaît une autre caractéristique, comme un angle par exemple et même pour un plafond, si or définit qu'il est horizontal, soit si l'on fixe deux angles ou deux degrés de liberté, il pourra être défini par un point seulement. De même, pour un cylindre quelconque, il faudra alors quatre points et on lui fixe une direction d'axe ou généralement un degré de liberté, il suffira de trois points.

Il en est de même pour toute surface courbe dont on peut écrire les équations mathématiques et trouver leur résolution suivant un programme mis dans la mémoire de l'ordinateur associé au télémètre.

Le procédé permet alors, en reconnaissant préalablement le type de surfaces courbes que l'on veut mesurer et en prenant le nombre de points nécessaires à la connaissance de la position de chacune, d'établir le métré de l'enveloppe avec ses arètes par intersection de toutes les surfaces courbes ou planes adjacentes.

## Revendications

1. Procédé de levé de métrés d'une enveloppe constituée et surfaces gauches ou planes délimitant un volume ouvert ou fermé, qui peut être notamment une pièce (5) située dans un bâtiment, lequel procédé utilise un télémètre (1) constitué d'un distancemètre à faisceau par exemple laser, et d'un théodolite, caractérisé en ce que :
- on positionne ledit télémètre en station (S1) sur un emplacement situé en un point origine quelconque dudit volume;
- on oriente successivement l'axe de visée du télémètre vers un nombre de points minimum correspondant à la connaissance de la surface gauche paramétrable et reconnus préalablement, soit par exemple pour un plan trois points quelconques mais non alignés ou deux seulement si on fixe une autre caractéristique géométrique ou degré de liberté;
- on s'assure que chaque point visé (P) est situé sur une surface ( 16 ) apte à réfléchir une partie du faisceau (17) dans sa direction d'incidence, permettant alors la mesure de télémétrie quelle que soit l'inclinaison de ladite surface;
- si ce n'est pas le cas, on place en chaque point choisi un réflecteur (19) permettant cette réflexion;
- on effectue avec le télémètre (1) la mesure de distance pour chacun desdits points (P) et on relève les angles de visée correspondant, en gisement (α) et en azimut (β), par rapport à un même axe de référence pour toutes les directions de visée;
- on calcule la forme et la position de chaque surface (14) à partir de coordonnées polaires des points situés dans celui-ci par rapport à l'emplacement de la station origine et à la résolution des équations de paramétrage connues de ladite surface préalablement reconnues;
- on calcule l'intersection (14) des surfaces prises deux à deux et on définit ainsi les arêtes (15) du volume considéré;
- on trace et on reproduit les métrés de ce volume, défini entièrement par son enveloppe, sous forme de plans, de coupe, d'élévation et/ou de perspectives.

2. Procédé de levé de métrés suivant la revendication 1, caractérisé en ce qu'on utilise un télémètre à faisceau laser et qu'on choisit chaque point de visée (P), de telle façon que la surface (16) de l'enveloppe au voisinage immédiat dudit point est, sous l'éclairage du faisceau laser (17), une source lumineuse orthotrope, de luminance constante dans toutes les directions quel que soit l'angle de cette surface avec l'axe du faisceau incident.

3. Procédé de levé de métrés suivant la revendicaiton 1, caractérisé en ce qu'on place, sur chaque point (P) de visée choisi, un réflecteur (19) de type papier fin autocollant sur la surface portant ledit point, lequel réflecteur est de couleur claire et mate, de surface parallèle avec son support.

4. Procédé de levé de métrés suivant l'une quelconque des revendications 1 à 3, caractérisé en ce que : on repère tout élément particulier (7) situé sur toute surface de l'enveloppe, par au moins un point (P4) caractéristique propre à chaque élément; on effectue les mesures de coordonnées de cedit point par le télémètre (1); on associe ces coordonnées au repère de ladite surface concernée (6₃); on mesure et on enregistre par ailleurs et par tout autre moyen les dimensions de cet élément par rapport à son point caractéristique et on reproduit la trace exacte de cedit élément à partir de l'emplacement de cedit point (P4) sur toute représentation de métré qui inclut ladite surface de l'enveloppe.

5. Procédé de levé de métré suivant l'une quelconque des revendications 1 à 4, pour le relevé d'un volume (20), de forme très allongée ou comportant des parties en retrait ne permettant des visées sur toutes les surfaces de l'enveloppe à partir du même emplacement de station du télémètre (1), caractérisé en ce que :
- on définit par tout moyen, au moins une surface virtuelle de partage (21) qui délimitera au moins deux volumes adjacents;
- on effectue un relevé de métrés à partir d'une station choisie dans chaque sous-volume (S2 et S3);
- on positionne chaque station par rapport à l'autre et on trace le métré de chaque partie de l'enveloppe associé à chaque station qui, tracée l'une après l'autre, reconstitue l'enveloppe globale.

6. Procédé de levé de métrés pour relever la position relative d'au moins deux enveloppes, constitué de surfaces gauches ou planes délimitant au moins deux volumes accolés (5 et 20), disposant d'au moins une ouverture commune (11) et dont le levé de métrés propre à chaque enveloppe est réalisé par un procédé suivant l'une quelconque des revendications 1 à 4, caractérisé en ce que :
- on choisit au moins dans un seul volume deux points, ou dans chaque volume, un point (P4 et P5) de référence, parmi ceux situés sur toute surface orientée en regard de ladite ouverture (11), de telle façon que chaque point de référence puisse être visé par le télémètre depuis les deux emplacements origines de stations retenues (S1 et S2) pour la levée de métrés desdits volumes;
- on marque sur chaque point un repère visible qui restera au moins le temps d'effectuer les mesures depuis les deux stations;
- on procède aux levés de métrés de chaque enveloppe en conservant particulièrement les coordonnées polaires des deux points de référence et on calcule la position et l'intersection de toutes les surfaces;
- on trace et on reproduit le métré d'une des enveloppes en positionnant lesdits deux points de référence, à partir desquels on repère la position de l'emplacement de la station de la deuxième enveloppe;
- on trace et on reproduit le métré de cette deuxième enveloppe sur la même représentation que la première à partir de sa station de mesure ainsi repérée.

7. Procédé de levé de métrés pour relever la position d'au moins deux enveloppes délimitant deux volumes (5 et 22) accolés ou non et ne disposant pas d'une ouverture commune, caractérisé en ce que:
- on définit une troisième enveloppe fictive ou réelle (10) qui soit accolée aux deux dites enveloppes et qui inclut au moins une ouverture de chaque desdites enveloppes;
- on effectue le levé de métrés de chaque dite enveloppe avec cette troisième suivant le procédé de la revendication 6;
- on trace et on reproduit le métré des deux enveloppes de base par rapport aux repères de la troisième.

8. Procédé de levé de métrés suivant l'une quelconque des revendications 1 à 7, caractérisé en ce que :
- on stocke dans la mémoire d'un ordinateur (3) les mesures des coordonnées polaires de tous les points visés par le télémètre, en codant et repérant, d'une part, les points associés à la même surface, d'autre part, les points associés à tous les éléments particuliers de chaque surface et enfin les surfaces associées à la même enveloppe repérée à partir d'un emplacement origine de station de mesure ;
- on programme l'ordinateur (3) pour calculer la position de toutes les surfaces à partir du point origine de ladite station, puis pour calculer l'intersection de toutes les surfaces deux à deux et à conserver en mémoire la définition de l'enveloppe ainsi déterminée par ses surfaces et ses arêtes;
- on programme l'ordinateur (3) pour calculer les mesures de distances et d'angle en fonction d'erreurs de mesure et de défauts de planéité possible afin de lisser les surfaces à une valeur de tolérance de l'ordre du cm;
- on range dans une mémoire permanente et précodée les dimensions mesurées de tout élément particulier pouvant occuper une partie des surfaces et on positionne chaque élément par rapport à un point caractéristique;
- on commande le tracé du métré désiré sous la forme souhaitée tels que plans, coupe, élévation et/ou perspective à partir des données mesurées puis calculées de l'enveloppe et celles connues des éléments.

9. Procédé de levé de métrés suivant la revendication 8, caractérisé en ce que l'on relie le télémètre audit ordinateur (3) de telle façon que les données des mesures soient directement introduites dans le programme de l'ordinateur au fur et à mesure du déroulement de cedit programme.

10. Procédé de levé de métrés suivant la revendication 9, caractérisé en ce que l'on place l'ensemble du dispositif de mesure et de calcul sur un même support mobile couplé à un système de visée et de reconnaissance de forme et l'on programme ledit support pour qu'il oriente automatiquement la visée du télémètre sur chaque surface de l'enveloppe et chaque élément particulier reconnu par le système de visée, ledit support mobile pouvant se déplacer d'un volume à un autre.

## Claims

1. Method for surveying measurements of an envelope constituted of skew or plane surfaces delimiting an open or closed volume, which may in particular be a room (5) situated in a building, which method uses a telemeter (1) constituted by a distance meter using a beam which may for example be a laser beam, and by a theodolite, characterised in that:
- the said telemeter is positioned on station (S1) at a location situated at any origin point of the said volume;
- the axis of sight of the telemeter is successively oriented towards a minimum number of points corresponding to knowledge of the parameterisable skew surface, which points are previously recognised, either for example, for a plane, any three non-colinear points or only two if another geometrical characteristic or degree of freedom is fixed;
- it is ensured that each sighted point (P) is situated on a surface (16) capable of reflecting a portion of the beam (17) in its direction of incidence, then allowing the telemetry measurement whatever the inclination of the said surface;
- if this is not the case, a reflector (19) allowing this reflection is placed at each chosen point;
- the distance is measured for each of the said points (P) using the telemeter (1) and the corresponding angles of sight, bearing (α) and azimuth (β), are determined with respect to the same reference axis for all the directions of sight;
- the shape and the position of each surface (14) is calculated from polar coordinates of the points situated in the latter with respect to the location of the origin station and to the solution of the previously recognised known parameterisation equations of the surface;
- the intersection (14) of the surfaces taken in pairs is calculated and the edges (15) of the relevant volume are thus defined;
- the measurements of this volume, which is defined entirely by its envelope, are drawn and reproduced in the form of plans, section, elevation and/or perspectives.

2. Method for surveying measurements according to Claim 1, characterised in that a laser telemeter is used and that each point of sight (P) is chosen so that the surface (16) of the envelope in the immediate vicinity of the said point is, under illumination by the laser beam (17), an orthotropic light source, with constant luminance in all directions whatever the angle between this surface and the axis of the incident beam.

3. Method for surveying measurements according to Claim 1, characterised in that at each point (P) of sight chosen is placed a reflector (19) of the thin paper type which is self-adhesive on the surface carrying the said point, which reflector has a light matt colour and has its surface parallel with its support.

4. Method for surveying measurements according to any one of Claims 1 to 3, characterised in that: every particular element (7) situated on all of the surface of the envelope is referenced by at least one characteristic point (P4) belonging to each element; the coordinates of this said point are measured by telemetry (1); these coordinates are associated with the reference of the said relevant surface (6₃); the dimensions of this element with respect to its characteristic point are furthermore measured and recorded by any other means and the exact trace of this said element is reproduced from the location of this said point (P4) on any measurement representation which includes the said surface of the envelope.

5. Method for surveying measurements according to any one of Claims 1 to 4, for determining a volume (20) with a very elongate shape or comprising recessed parts which do not allow sights on all the surfaces of the envelope from the same station location of the telemeter (1), characterised in that:
- at least one virtual dividing surface (21) is defined by any means, which surface will delimit at least two adjacent volumes;
- measurements are determined from one station chosen in each subvolume (S2 and S3);
- each station is positioned with respect to the other and the measurements of each part of the envelope associated with each station are drawn, which, drawn one after the other, reconstruct the overall envelope.

6. Method for surveying measurements for determining the relative position of at least two envelopes constituted by skew or plane surfaces delimiting at least two adjoining volumes (5 and 20) having at least one common opening (11), the measurements belonging to each envelope being surveyed by a method according to any one of Claims 1 to 4, characterised in that:
- at least two reference points are chosen in a single volume, or one reference point (P4 and P5) in each volume, from those situated on any surface or orientated opposite the said opening (11), so that each reference point may be sighted by the telemeter from the two origin station locations (S1 and S2) adopted for surveying measurements of the said volumes;
- a visible reference, which will remain in place for at least the time taken to carry out the measurements from the two stations, is marked on each point;
- the measurements of each envelope are surveyed, retaining in particular the polar coordinates of the two reference points, and the position of intersection of all the surfaces is calculated;
- the measurements of one of the envelopes are drawn and reproduced by positioning the said two reference points, from which the position of the location of the station in the second envelope is referenced;
- the measurements of this second envelope are drawn and reproduced on the same representation as the first from its measurement station thus referenced.

7. Method for surveying measurements for determining the position of at least two envelopes delimiting two adjoining or nonadjoining volumes (5 and 22), not having a common opening, characterised in that:
- an imaginary or real third envelope ( 10 ) is defined, which adjoins the two said envelopes and which includes at least one opening of each of the said envelopes;
- the measurements of each said envelope are surveyed with this third according to the method of Claim 6;
- the measurements of the two basic envelopes are drawn and reproduced with respect to the references of the third.

8. Method for surveying measurements according to any one of Claims 1 to 7, characterised in that:
- the measurements of the polar coordinates of all the points sighted by the telemeter are stored in the memory of a computer (3), by coding and referencing, on the one hand, the points associated with the same surface, and on the other hand the points associated with all the particular elements of each surface and finally the surfaces associated with the same envelope referenced from a measurement station origin location;
- the computer (3) is programmed in order to compute the position of all the surfaces from the origin of the said station, then in order to calculate the intersection of all the surfaces in pairs and to retain in memory the definition of the envelope thus determined by its surfaces and edges;
- the computer (3) is programmed in order to compute the distance measurements and angle measurements as a function of measurement errors and possible flatness defects in order to smooth the surfaces to a tolerance value of the order of one cm;
- the measured dimensions of every particular element which can occupy a portion of the surfaces are put in permanent precoded memory and each element is positioned with respect to a characteristic point;
- the desired drawing of the measurements is ordered in the required form such as plans, section, elevation and/or perspective from the measured then computed data of the envelope and the known data of the elements.

9. Method for surveying measurements according to Claim 8, characterised in that the telemeter is connected to said computer (3) so that the data of the measurements are directly introduced into the program of the computer as this said program runs.

10. Method for surveying measurements according to Claim 9, characterised in that the measurement and computation device assembly is placed on the same movable support coupled with a sighting and shape recognition system and the said support is programmed for it to orientate the sight of the telemeter automatically onto each surface of the envelope and each particular element recognised by the sighting system, the said movable support being able to move from one volume to another.

## Patentansprüche

1. Verfahren zur Vermessung von unebenen oder ebenen Flächen, die einen offenen oder geschlossenen Raum umgeben, der insbesondere ein Zimmer (5) in einem Gebäude sein kann, Verfahren, das mit einem Abstandsmesser (1) arbeitet, der aus einem Entfernungsmesser mit z.B. einem Laserbündel und einem Theodolit besteht, dadurch gekennzeichnet, daß
- man den besagten Abstandsmesser stationär (S1) an einer Stelle plaziert, die sich an irgendeinem Ausgangspunkt des besagten Raums befindet;
- man die Visierachse des Abstandsmessers nach und nach auf eine Mindestanzahl von vorher ermittelten Punkten ausrichtet, die der Kenntnis der unebenen, parametrierbaren Fläche entspricht, z.B. für eine Ebene drei beliebige Punkte, die nicht fluchtrecht ausgerichtet sind, oder nur zwei, wenn man ein anderes geometrisches Merkmal oder einen anderen Freiheitsgrad festlegt;
- man sicherstellt, daß sich jeder visierte Punkt (P) auf einer Fläche (16) befindet, die einen großen Teil des Bündels (17) in seine Einfallsrichtung zurückwerfen kann und auf diese Weise unabhängig vom Neigungsgrad der genannten Fläche die Abstandsmessung ermöglicht;
- ist dies nicht der Fall, plaziert man an jedem ausgewählten Punkt einen Reflektor (19), der diese Reflexion ermöglicht;
- man mit dem Abstandsmesser (1) die Abstandsmessung für jeden der genannten Punkte (P) vornimmt und die entsprechenden Sichtwinkel mißt, den Peilwinkel (α) und den Azimut (ß), und zwar bezüglich einer für alle Visurrichtungen gleichen Bezugsachse;
- man die Form und Position jeder Fläche (14) berechnet, ausgehend von Polarkoordinaten der auf der Fläche befindlichen Punkte bezüglich des Standorts der Ausgangsstation und zur Lösung der bekannten, vorher erkundeten Parametrier-Gleichungen der besagten Fläche;
- man den Schnittpunkt (14) der paarweise genommenen Flächen berechnet und so die Ecken (15) des betrachteten Raums bestimmt;
- man die Maße dieses durch die ihn umgebenden Flächen vollkommen definierten Raums aufzeichent und in Form von Zeichnungen, Schnitten, Draufsichten und/oder Perspektiven darstellt.

2. Vermessungsverfahren nach Anspruch 1, dadurch gekennzeichnet, daß man einen Laserbündel-Abstandsmesser einsetzt und jeden Sichtpunkt (P) so auswählt, daß die in unmittelbarer Nähe des besagten Punktes gelegene Fläche (16) des Raums bei Beleuchtung durch das Laserbündel (17) eine orthotrope Lichtquelle konstanter Leuchtdichte in allen Richtungen darstellt, unabhängig vom Winkel, den diese Fläche mit der Achse des Einfallsbündels bildet.

3. Vermessungsverfahren nach Anspruch 1, dadurch gekennzeichnet, daß man an jedes ausgewählten Visurpunkt (P) eine Reflektor (19) vom Typ eines dünnen Klebestreifens auf der Fläche, auf der sich der besagte Punkt befindet, vorsieht, wobei der Reflektor von heller, matter Färbung ist und eine zu seiner Unterlage parallele Fläche aufweist.

4. Vermessungsverfahren nach einem der Ansprüche 1 bis 3, dadurch gekennzeichnet, daß man jegliches, auf jeglicher Fläche des Raums befindliche besondere Bauteil (7) durch mindestens einen für jedes Bauteil charakteristischen Punkt (P4) markiert; daß man mit dem Abstandsmesser (1) die Messung der Koordinaten dieses besagten Punktes vornimmt; daß man diese Koordinaten mit dem Bezugspunkt der besagten entsprechenden Flächen (6₃) verbindet; daß man außerdem mit einer beliebigen anderen Vorrichtung die Abmessungen dieses Bauteils bezüglich seines charakteristischen Punkts mißt und aufzeichnet und die genaue Spur dieses besagten Bauteils vom Standort dieses besagten Punkts (P4) aus bei jeder Vermessungsdarstellung der besagten Fläche des Raums wiedergibt.

5. Vermessungsverfahren nach einem der Ansprüche 1 bis 4 zur Vermessung eines sehr langen Raums (20) oder eines Raums mit zurückspringenden Bereichen, die keine Visur über alle umgebenden Flächen des Raums von einem einzigen Standort des Abstandsmessers (1) aus erlauben, dadurch gekennzeichnet, daß:
- man mit einer beliebigen Vorrichtung mindestens eine tatsächliche gemeinsame Fläche (21) bestimmt, die mindestens zwei angrenzende Räume begrenzt;
- daß man von einer in jedem Raum ausgewählten Station (S2 und S3) aus eine Vermessung vornimmt;
- daß man die Stationen zueinander positioniert und man die Vermessung jedes Bereichs der zu jeder Station gehörenden umgebenden Wände aufzeichnet, wobei die Bereiche, einer nach dem anderen dargestellt, den gesamten Raum ergeben.

6. Vermessungsverfahren zur Vermessung der Lage von mindestens zwei aneinandergebauten Räumen (5 und 20), die aus unebenen oder ebenen Flächen bestehen und über mindestens eine gemeinsame Öffnung (11) verfügen, so daß die Vermessung jedes einzelnen Raums mit einem Verfahren nach einem der Ansprüche 1 bis 4 vorgenommen wird, dadurch gekennzeichnet, daß:
- man in einem einzigen Raum mindestens zwei Punkte oder in jedem Raum einen Bezugspunkt (P4 und P5) unter denen auf jeglicher, der genannten Öffnung (11) gegenüberliegenden Fläche auswählt, und zwar so, daß jeder Bezugspunkt vom Abstandsmesser von den beiden festgelegten Ausgangsstandorten für die Stationen (S1 und S2) zur Vermessung der besagten Räume angepeilt werden kann;
- man an jedem Punkt eine sichtbare Markierung anbringt, die mindestens während der Zeit der Vermessung von den beiden Stationen aus bestehen bleibt;
- man die Vermessung jedes Raums vornimmt, indem man insbesondere die Polarkoordinaten der beiden Bezugspunkte bewahrt und die Position und den Schnittpunkt aller Flächen berechnet;
- man die Maße eines der Räume aufzeichnet und darstellt, indem man die beiden besagten Bezugspunkte positioniert, anhand derer man die Position des Standorts der Station des zweiten Raums ermittelt;
- man die Maße dieses zweiten Raums auf der gleichen Darstellung, auf der auch der erste dargestellt ist, von seiner so ermittelten Meßstation aus aufzeichnet und darstellt.

7. Vermessungsverfahren zur Vermessung der Position von mindestens zwei angrenzenden oder nicht angrenzenden Räumen (5 und 22) ohne gemeinsame Türöffnung, dadurch gekennzeichnet, daß:
- man einen dritten, fiktiven oder tatsächlichen Raum (10) definiert, der an die beiden besagten Räume angrenzt, und der mindestens eine Öffnung jedes der beiden Räume aufweist;
- man jeden besagten Raum mit diesem dritten nach dem Verfahren des Anspruchs 6 vermißt;
- man die Maße der beiden Ursprungsräume bezüglich der Bezugspunkte des dritten aufzeichnet und darstellt;

8. Vermessungsverfahren nach einem der Ansprüche 1 bis 7, dadurch gekennzeichnet, daß:
- man in den Speicher eines PC (3) die Maße der Polarkoordinaten aller vom Abstandsmesser visierten Punkte eingibt, indem man einerseits die zu einer Fläche gehörenden Punkte und andererseits die zu allen besonderen Bauteilen jeder Fläche gehörenden Punkte und schließlich die zu ein und demselben Raum gehörenden Flächen, die von einem Ausgangsstandort der Meßstation aus ermittelt wurden, kodiert und markiert;
- man den PC (3) so programmiert, daß er die Lage aller Flächen vom Ausgangspunkt der besagten Station aus und dann den Schnittpunkt aller paarweise genommenen Flächen berechnet und die Definition des so durch seine Flächen und Ecken bestimmten Raumes im Speicher festhält;
- man den PC (3) so programmiert, daß er die Abstands- und Winkelmessungen unter Berücksichtigung von Meßabweichungen und möglichen Ebenheitsfehlern berechnet und die Flächen bis zu einem Toleranzwert von etwa einem Zentimeter eben macht;
- man in einen vorkodierten Festspeicher die gemessenen Abmessungen jedes besonderen Bauteils eingibt, das einen Teil der Flächen belegen kann, und man jedes Bauteil bezüglich eines charakteristischen Punkts positioniert;
- man die graphische Darstellung der gewünschten Vermessung in der gewünschten Form, als Zeichnung, Schnitt, Draufsicht und/oder Perspektive, ausgehend von den gemessenen und dann berechneten Daten des Raums und den bekannten Daten der Bauteile, vornimmt.

9. Vermessungsverfahren nach Anspruch 8, dadurch gekennzeichnet, daß man den Abstandsmesser so an den besagten PC (3) anschließt, daß die Meßdaten direkt in das Programm des PC eingespeist werden, je nach Ablauf dieses besagten Programms.

10. Vermessungsverfahren nach Anspruch 9, dadurch gekennzeichnet, daß man die gesamte Meß- und Recheneinheit auf eine gemeinsame, bewegliche Halterung montiert, die mit einem Visur- und Formerkennungssystem gekoppelt ist, und daß man die besagte Halterung so programmiert, daß sie die Visur des Abstandsmessers automatisch auf jede Fläche des Raums und jedes vom Visursystem erkannte besondere Bauteil richtet, wobei die besagte bewegliche Halterung von einem Raum zum anderen bewegt werden kann.
